**Europäisches Patentamt**

**European Patent Office**

**Office européen des brevets**

(11) Veröffentlichungsnummer: **0 495 362 A1**

## (12) EUROPÄISCHE PATENTANMELDUNG

(21) Anmeldenummer: **92100105.3**

(22) Anmeldetag: **07.01.92**

(51) Int. Cl.5: **B65G 47/90**, B66C 1/54

(30) Priorität: **18.01.91 DE 4101317**

(43) Veröffentlichungstag der Anmeldung:
**22.07.92 Patentblatt 92/30**

(84) Benannte Vertragsstaaten:
**DE FR GB IT**

(71) Anmelder: **Fried. Krupp Gesellschaft mit beschränkter Haftung
Altendorfer Strasse 103
W-4300 Essen 1(DE)**

(72) Erfinder: **Becker, Hans Joachim, Dipl.-Ing.
Wortbergrode 13
W-4300 Essen 1(DE)**
Erfinder: **Sondermann, Willi
Liesenfeldstrasse 10A
W-4250 Bottrop(DE)**

(54) **Lochgreifer.**

(57) Die Erfindung betrifft einen Lochgreifer mit zwei Greifarmen, die parallel zu sich selbst und zueinander beweglich in einem Rahmen gehalten und unter Einwirkung eines Antriebs relativ zueinander in eine Öffnungs- oder eine Haltestellung verschiebbar sind.

Nach der Erfindung lassen sich die Greifarme (1,2) mittelbar unter Einwirkung des Antriebs (12) dadurch in eine Öffnungsstellung mit gegenseitiger Abstützung und in eine gespreizte Haltestellung verschieben, daß der Antrieb einen Steuerungsring (8) in Längsrichtung der Greifarme (1, 2) hin- und herbewegt, dessen Öffnung (8a) den gegenseitigen Abstand der Greifarme begrenzt.

Mit dem Steuerungsring (8) wird gleichzeitig ein zwischen den Greifarmen (1, 2) angeordneter Spreizdorn (6) mitgeführt, der sich in der Haltestellung des Steuerungsrings (8) zumindest bis in den Bereich des Halteabschnitts der Halteköpfe (1c, 2d) erstreckt; dieser ist als in Richtung der Verschiebebewegung (Doppelpfeil 7) der Greifarme weisender Vorsprung (1k, 2l) ausgebildet.

FIG. 1

Die Erfindung betrifft einen Lochgreifer mit zwei Greifarmen, die parallel zu sich selbst und zueinander beweglich in einem Rahmen gehalten und unter Einwirkung eines Antriebs relativ zueinander in eine Öffnungs- oder eine Haltestellung verschiebbar sind.

Lochgreifer der eingangs erwähnten Gattung werden in vielen Fällen hydraulisch oder pneumatisch betätigt, wobei sich die Greifarme, ggf. auch entgegen einer Rückstellung, zwischen einer Öffnungs- oder einer Haltestellung verschieben. In der Öffnungsstellung können die Greifarme in die Bohrung (bzw. Öffnung) des aufzunehmenden Gegenstands eingefahren bzw. aus dieser herausgezogen werden; in der Haltestellung wird zwischen dem Gegenstand und den Greifarmen eine Verbindung hergestellt, deren Tragfähigkeit von den Reibungsverhältnissen bestimmt ist, sofern nicht zusätzlich besondere Maßnahmen ergriffen werden. Der Nachteil konventioneller Lochgreifer ist darin zu sehen, daß ihre Greifarme auch auf Biegung beansprucht sind. Dies gilt insbesondere in den Fällen, in denen die Erzeugung größerer Haltekräfte gefordert ist.

Der Erfindung liegt die Aufgabe zugrunde, einen Lochgreifer zu entwickeln, der hinsichtlich der Beanspruchung seiner Greifarme günstiger ausgelegt ist als konventionelle Bohrungsgreifer und der bei hoher Betriebssicherheit die Erzeugung erheblicher Haltekräfte zuläßt.

Der Lochgreifer soll insbesondere so beschaffen sein, daß in der Haltestellung eine nennenswerte Beanspruchung der Greifarme auf Biegung durch die Haltestellung selbst ausgeschlossen ist.

Die Erfindung wird durch einen Lochgreifer gelöst, welcher die Merkmale des Anspruchs 1 aufweist.

Der Grundgedanke der Erfindung besteht darin, die Bewegung der beiden Greifarme relativ zueinander und bezüglich eines Rahmens durch Verfahren eines Steuerungsrings und eines Spreizdorns herbeizuführen. Letzterer bewegt sich im Laufe seiner Verschiebung zwischen die Halteköpfe der Greifarme und erstreckt sich in der ausgefahrenen Spreizstellung - welche gleichzeitig die Haltestellung der Greifarme festlegt - zumindest bis in den Bereich von deren Halteabschnitten, an denen sich der aufzunehmende Gegenstand abstützt.

Diese Anordnung hat zur Folge, daß die Halteköpfe der Greifarme sich unter Lasteinwirkung gleichzeitig seitlich an dem Spreizdorn abstützen und somit keine Biegebeanspruchung erfahren. Die Verschiebebewegung der Greifarme relativ zueinander und bezüglich des Rahmens wird also lediglich mittelbar mittels eines Antriebs ausgelöst, welcher unter anderem den Spreizdorn in Längsrichtung bezüglich der Greifarme verfährt.

Diese sind dabei seitlich, d. h. in Richtung ihrer Verschiebebewegung, in einer bestimmten Weise geformt und wirken mit dem Steuerungsring zusammen, welcher die Größe des Abstands zwischen den Greifarmen begrenzt bzw. beeinflußt. Der Erfindungsgegenstand ist dabei in der Weise ausgebildet, daß der erwähnte Abstand in der zurückgezogenen Öffnungsstellung des Spreizdorns am kleinsten und in dessen ausgefahrener Spreizstellung am größten ist, so daß ein Gegenstand mit einer geeigneten Bohrung oder Öffnung bei der sich anschließenden Bewegung des Rahmens mitgeführt wird. Dieser kann in an sich bekannter Weise mit einer Handhabungseinheit in Verbindung stehen, insbesondere mit einem mehrachsig beweglichen Roboter.

Im einzelnen weist der Erfindungsgegenstand die folgenden, zum Teil bereits erwähnten wesentlichen Merkmale auf:

Zwischen den Greifarmen ist - an diesen anliegend - ein Spreizdorn in Richtung auf deren Halteköpfe und von diesen weg verfahrbar gehalten, der in Richtung der Verschiebebewegung der Greifarme mit zueinander parallelen Außenkanten ausgestattet ist. Die einander zugewandten Innenflächen der Greifarme weisen - im Längsschnitt durch die Spreizdorn-Längsachse in Richtung der Verschiebebewegung gesehen - einen geradlinigen, zur Längsachse parallelen Anfangsbereich auf, an dem der Spreizdorn in der zurückgezogenen Öffnungsstellung anliegt, und sind im Anschluß an den Anfangsbereich mit einem in Richtung auf den jeweiligen Haltekopf geneigten Übergangsbereich ausgestattet, der jeweils in einen bezüglich des Anfangsbereichs vorspringenden, zu diesem parallelen Endbereich übergeht, an dem sich der Spreizdorn in der Spreizstellung abstützt. Der Spreizdorn ist ebenso mittels des Antriebs des Bohrungsgreifers bewegbar wie ein die Greifarme umschließender Steuerungsring, dessen Öffnung den gegenseitigen Abstand der Greifarme begrenzt.

Im Längsschnitt durch die Spreizdorn-Längsachse in Richtung der Verschiebebewegung gesehen weisen die Greifarme in einem Zwischenabschnitt, in den der Spreizdorn weder die Öffnungs- noch die Spreizstellung einnimmt, eine außenliegende Verstellfläche auf, die - bezüglich der Längsachse in Richtung auf den jeweiligen Haltekopf geneigt - in dieser Richtung in eine zur Längsachse parallele Öffnungsstellungsfläche und in dazu entgegengesetzter Richtung in eine gleichartig ausgerichtete Spreizstellungsfläche übergeht. Der Verfahrhub des Antriebs und die Länge des Spreizdorns sind derart aneinander angepaßt, daß dieser sich in der die Haltestellung der Greifarme festlegenden, ausgefahrenen Spreizstellung zumindest bis in den Bereich des Halteabaschnitts der Halteköpfe erstreckt, welcher zumindest als in Richtung der Verschiebebewegung der Greifarme weisender Vorsprung ausgebildet ist.

Die Ausstattung der Halteköpfe mit einem Halteabschnitt in Form eines Vorsprungs hat dabei zur Folge, daß der Bohrungsgreifer erhebliche Kräfte aufnehmen kann, falls die Bohrung oder Öffnung, in welcher sich die Greifarme nach dem Überführen in die gespreizte Haltestellung finden, geeignet ausgebildet, d. h. in Richtung auf den Steuerungsring oder den Rahmen des Bohrungsgreifers hinterschnitten ist. Dies läßt sich u. a. dadurch in einfacher Weise verwirklichen, daß die Bohrung oder Öffnung entweder einen Absatz aufweist oder sich zumindest teilweise in der bereits erwähnten Richtung verjüngt, so daß eine mit den Halteabschnitten der Greifarme zusammenwirkende Mitnahmefläche zur Verfügung steht.

Die Halteabschnitte der Greifarme lassen sich insbesondere dadurch erzeugen, daß die Wandstärke der Halteköpfe zumindest auf einem Teil ihrer Längserstreckung in Richtung auf ihre Endfläche zunimmt (Anspruch 2). Bei einer besonders einfachen Ausführungsform nimmt die Wandstärke in der erwähnten Richtung geradlinig zu. Eine andere vorteilhafte Ausgestaltung besteht darin, die Halteköpfe mit einem Absatz auszustatten, wobei dieser insbesondere auch als auswechselbar befestigtes Bauelement ausgebildet sein kann. Im Rahmen des erfindungsgemäßen Lösungsgedankens ist es auch möglich, die Halteköpfe selbst auswechselbar auszugestalten, um auf diese Weise die Anpassungsfähigkeit des Bohrungsgreifers an unterschiedliche Einsatzbedingungen zu verbessern.

Vorzugsweise ist der Spreizdorn an einem Tragelement gehalten, welches senkrecht zur Ebene der Verschiebebewegung zwischen den Greifarmen angeordnet und an dem Steuerungsring befestigt ist (Anspruch 3). Da der Spreizdorn zwischen den Tragarmen liegt und ggf. relativ zu diesem bewegt werden muß, kann das Tragelement entweder nur seitlich zwischen den Greifarmen oder an deren von den Halteköpfen abgewandten Rückseite nach außen geführt werden.

Damit die Halteköpfe der Greifarme in der Haltestellung von vornherein die vorgesehene Lage einnehmen, sollte die Öffnung des Steuerungsrings derart bemessen sein, daß der gegenseitige Abstand der Greifarme allenfalls geringfügig größer ist als durch den die Spreizstellung einnehmenden Spreizdorn vorgegeben (Anspruch 4).

Der Erfindungsgegenstand kann dadurch vorteilhaft ausgestaltet sein, daß der Steuerungsring auf der von den Halteköpfen abgewandten Seite an einer Steuerplatte gehalten ist, die mit dem Antrieb in Verbindung steht (Anspruch 5). Letztere kann in an sich bekannter Weise insbesondere als pneumatisch oder hydraulisch betriebener Linearantrieb ausgebildet sein.

Die Haltestellung der Greifarme läßt sich in besonders einfacher Weise dadurch festlegen, daß am Rahmen selbst ein Anschlag angebracht ist, an dem eines der beiden Steuerteile - der Steuerungsring oder die Steuerplatte - gegen Ende des Verfahrhubs zur Anlage kommt (Anspruch 6). Falls der Anschlag - beispielsweise über Verstellschrauben - einstellbar ausgebildet wird, läßt sich die ausgefahrene Spreizstellung des Spreizdorns feinfühlig unter dem Gesichtspunkt festlegen, daß die Greifarme keine Biegebeanspruchung erfahren sollen.

Um die Verschiebung des Spreizdorns zwischen den Greifarmen, d. h. insbesondere das Einfädeln in den Bereich der Halteköpfe und deren Querbewegung zu erleichtern, weist der Spreizdorn von den parallelen Außenkanten ausgehend an seinem den Halteköpfen zugewandten Endabschnitt in Richtung auf diese geneigte Endkanten auf (Anspruch 7). Diese Endkanten lösen den Spreizvorgang dadurch aus, daß der Spreizdorn während seiner Ausfahrbewegung in Richtung auf die Halteköpfe auf den Übergangsbereich der Greifarm-Innenflächen auftrifft.

Um erforderlichenfalls die durch den Spreizdorn ausgelöste Querbewegung der Greifarme unterstützen zu können, kann der Erfindungsgegenstand mit einem auf diese einwirkenden Verstellelement ausgestattet sein, welches bestrebt ist, deren gegenseitigen Abstand zu vergrößern (Anspruch 8). Im einfachsten Fall kann dabei das Verstellelement aus zumindest einem Federelement bestehen, insbesondere einem Druckluftpuffer oder einer Feder.

Eine in dieser Art ausgebildete Ausführungsform ist dadurch gekennzeichnet, daß auf der von den Halteköpfen abgewandten Rückseite der Greifarme eine an diesen angreifende Druckfeder angebracht ist (Anspruch 9); als Druckfeder kommt dabei insbesondere eine zylindrische Schraubenfeder oder eine Blattfeder in Betracht.

Die Erfindung wird nachfolgend anhand mehrerer in der Zeichnung dargestellter Ausführungsbeispiele im einzelnen erläutert.

Es zeigen:

| Fig. 1 | schematisiert im Teillängsschnitt die Greifarme eines Lochgreifers in der Öffnungsstellung, |
| Fig. 2a | den in Fig. 1 dargestellten Lochgreifer, dessen Greifarme die Haltestellung einnehmen, |
| Fig. 2b | eine Ansicht der (in der Darstellung untenliegenden) Endflächen der Greifarme und des Endabschnitts des zwischen diesen befindlichen Spreizdorns, |
| Fig. 3a | stark schematisiert eine Seiten- |

ansicht der Greifarme mit zugehörigem Antrieb und einem aufzunehmenden Gegenstand in Gestalt einer Hülse,

Fig. 3b     im Teillängsschnitt die in Fig. 3a dargestellte Ausführungsform des Erfindungsgegenstandes,

Fig. 4     einen Längsschnitt durch den in Fig. 3b links angeordneten Greifarm,

Fig. 5a bis e     Horizontalschnitte gemäß Linie Va-Va bis Ve-Ve in Fig. 4 und

Fig. 6     eine Ansicht der Innenfläche des Greifarms, welche in Fig. 4 nach rechts ausgerichtet ist.

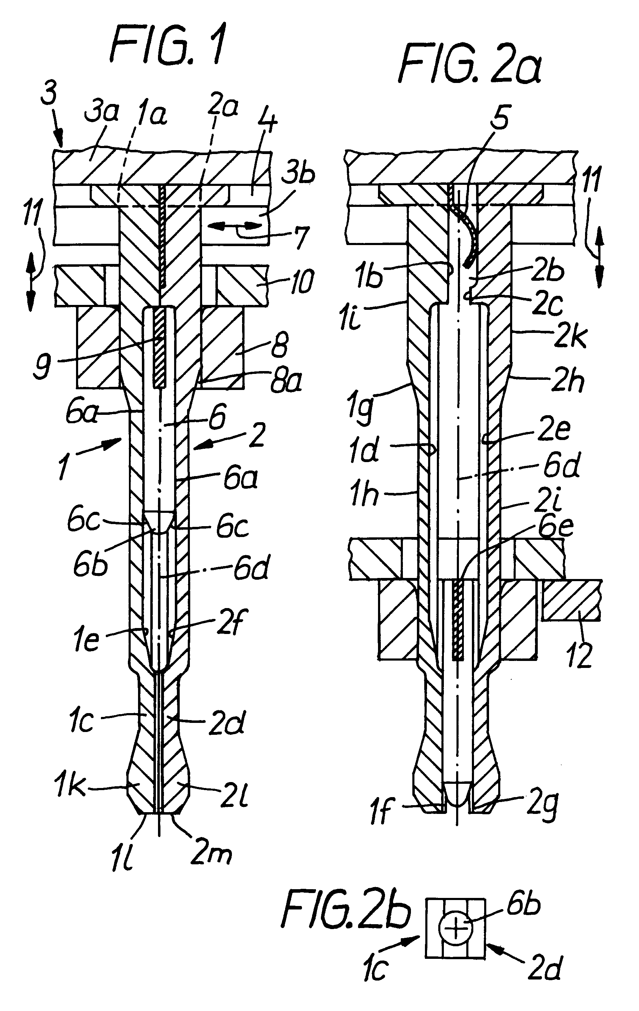

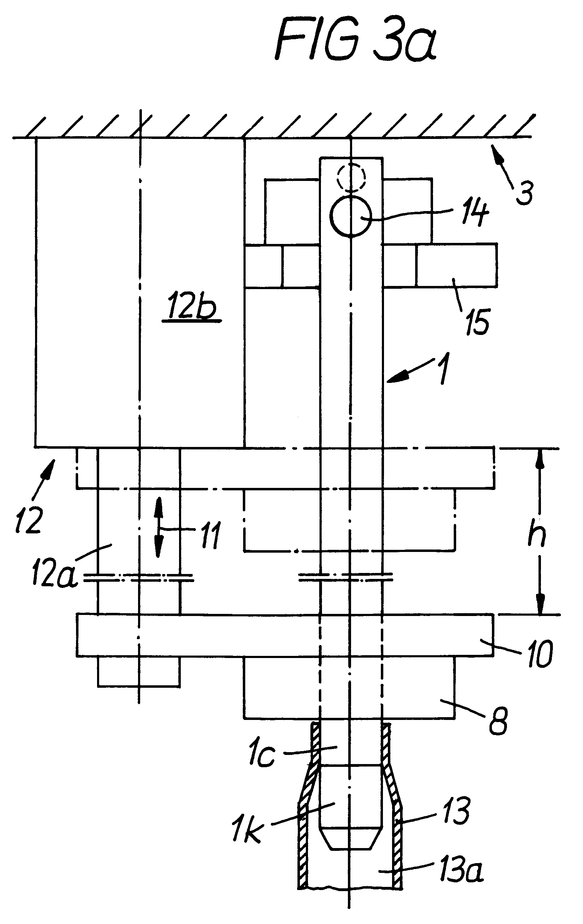

Hauptbestandteile des neuartigen Lochgreifers sind u. a. zwei Greifarme 1 und 2, die parallel zu sich selbst und zueinander beweglich in einem Rahmen 3 gehalten und unter Einwirkung eines Antriebs (vgl. dazu Fig. 3a) relativ zueinander in eine Öffnungs- oder eine Haltestellung (vgl. dazu Fig. 1 bzw. Fig. 2a) verschiebbar sind.

In dem zunächst angesprochenen Ausführungsbeispiel (Fig. 1 und Fig. 2a, b) ist die bewegliche Abstützung der Greifarme 1, 2 dadurch verwirklicht, daß diese sich über Gleitschuhe 1a bzw. 2a senkrecht zur Zeichenebene jeweils in einer Führungsnute - dargestellt ist lediglich die hintere Führungsnute 4 - abstützen; diese springt also senkrecht zur Zeichenebene sowohl bezüglich des Oberteils 3a als auch des Unterteils 3b des Rahmens 3 zurück.

Der Rahmen 3 kann in an sich bekannter, nicht dargestellter Weise an einer Handhabungseinheit befestigt sein, mittels welcher die weiteren Bewegungen ausgeführt werden können, welche im Hinblick auf die Handhabung eines aufzunehmenden und abzusetzenden Gegenstands vorgegeben sind.

An der Rückseite der Greifarme, d. h. im Bereich ihrer Gleitschuhe 1a, 2a, greift eine Blattfeder 5 an; diese ist an dem linken Greifarm 1 befestigt und als auf dem anderen Greifarm gleitende Druckfeder bestrebt, den Abstand zwischen den beiden Greifarmen zu vergrößern.

Der rechte Greifarm 2 weist im Bereich der Blattfeder 5 eine Aussparung 2b (vgl. 2a) auf, welche die Blattfeder in der in Fig. 1 dargestellten Öffnungsstellung aufnimmt; die Greifarme können also so weit aufeinander zubewegt werden, daß ihre einander zugewandten Innenflächen 1b, 2c (vgl. Fig. 2a) auf einem Teil ihrer Längserstreckung aneinander anliegen.

Die Greifarme 1, 2 sind auf ihrer Innenseite derart ausgebildet, daß sie in der bereits erwähnten Öffnungsstellung einen Spreizdorn 6 mit Kreisquerschnitt (vgl. dazu Fig. 2b) aufnehmen können. Dieser ist - in Richtung der Verschiebebewegung der Greifarme (angedeutet durch einen Doppelpfeil 7) gesehen - einerseits mit zueinander parallelen Außenkanten 6a und andererseits an seinem nach unten gerichteten Endabschnitt 6b mit Endkanten 6c ausgestattet, die in Richtung auf die Halteköpfe 1c, 2d bezüglich der Spreizdorn-Längsachse 6d geneigt sind. In dem dargestellten Ausführungsbeispiel ist der Spreizdorn 6 überwiegend zylindrisch und an seinem den Halteköpfen 1c, 2d zugewandten Endabschnitt 6b kegelstumpfförmig ausgebildet.

Im Längsschnitt durch die Längsachse 6d in Richtung der Verschiebebewegung (Doppelpfeil 7) gesehen weisen die Innenflächen 1b, 2c einen geradlinigen, zur Längsachse parallelen Anfangsbereich 1d, 2e auf, an dem der Spreizdorn 6 in der zurückgezogenen Öffnungsstellung (Fig. 1) anliegt, und sind im Anschluß an diesen Anfangsbereich mit einem in Richtung auf den jeweiligen Haltekopf 1c, 2d geneigten Übergangsbereich 1e bzw. 2f ausgestattet; dieser geht jeweils in einen bezüglich des Anfangsbereichs 1d, 2e vorspringenden, zu diesem parallelen Endbereich 1f bzw. 2g über, an dem sich der Spreizdorn 6 in der Spreizstellung (vgl. dazu Fig. 2a) abstützt.

Im Schnitt durch die Mittelebene (verlaufend parallel zur Zeichenebene durch die Längsachse 6d des Spreizdorns 6) gesehen weisen die Greifarme 1, 2 im Anschluß an einen Zwischenabschnitt, in dem der Spreizdorn 6 weder die Öffnungs- noch die Spreizstellung einnimmt, eine außenliegende Verstellfläche 1g bzw. 2h auf, die - bezüglich der Längsachse 6d in Richtung auf den jeweiligen Haltekopf 1c bzw. 2d geneigt - in dieser Richtung in eine zur Längsachse parallele Spreizstellungsfläche 1h bzw. 2i und in dazu entgegengesetzter Richtung in eine gleichartig ausgerichtete Öffnungsstellungsfläche 1i bzw. 2k übergeht.

Der Spreizdorn 6 ist ebenso mittels des noch zu beschreibenden Antriebs (vgl. dazu Fig. 3a) bewegbar wie ein die Greifarme 1, 2 umschließender Steuerungsring 8, dessen Öffnung 8a den gegenseitigen Abstand der Greifarme begrenzt. Bei dem in Rede stehenden Ausführungsbeispiel (vgl. dazu Fig. 1 und 2a) ist der Spreizdorn an einem Tragelement in Gestalt einer Tragplatte 9 gehalten, welche zwischen den Greifarmen 1, 2 angeordnet und senkrecht zur Zeichenebene an dem Steuerungsring 8 befestigt ist. Dieser ist seinerseits auf der von den Halteköpfen 1c, 2d abgewandten Seite an einer Steuerplatte 10 gehalten, die mittels des Antriebs (Fig. 3a) in Richtung des Doppelpfeils 11 bezüglich des Rahmens 3 nach unten bzw. nach oben verfahren werden kann.

Der Bewegungsspielraum der Teile 6 und 8 bis 10 bezüglich des Rahmens 3 ist durch einen Anschlag 12 begrenzt, an dem die Steuerplatte 10 im Laufe ihres Verfahrhubs in Richtung auf die Halteköpfe 1c, 2d schließlich zur Anlage kommt.

Um in der Kaltestellung, d. h. bei ausgefahrener Spreizstellung des Spreizdorns 6 (Fig. 2a), in jedem Fall die Mitnahme des aufzunehmenden Gegenstands sicherzustellen, sind die Halteköpfe 1c, 2d mit einem Halteabschnitt ausgestattet, der aus einem in Richtung der Verschiebebewegung (Doppelpfeil 7) weisenden Vorsprung 1k bzw. 2l besteht. Die Vorsprünge sind dabei dadurch hervorgerufen, daß die Wandstärke der Halteköpfe auf einem Teil ihrer Längserstreckung in Richtung auf ihre jeweilige Endfläche 1l bzw. 2m zunimmt.

Der Erfindungsgegenstand läßt sich folgendermaßen handhaben:

In der in Fig. 1 dargestellten Öffnungsstellung - in welcher der Spreizdorn 6 auch über seine Rückenfläche 6e (vgl. dazu Fig. 2a) an den Greifarmen 1 und 2 anliegt - liegen die Innenflächen 1b, 2c (entgegen der Rückstellwirkung der Blattfeder 5) aneinander an. Die Vorsprünge 1k, 2l der Halteköpfe 1c, 2d weisen dementsprechend die kleinste Abmessung in Richtung der Verschiebebewegung (Doppelpfeil 7) auf, so daß die Halteköpfe in eine geeignet ausgebildete Öffnung oder Bohrung des aufzunehmenden Gegenstands eingeführt werden können.

Beim Verfahren der Steuerplatte 10 in Richtung auf die Halteköpfe 1k, 2l können die Greifarme 1, 2 relativ zueinander und zum Rahmen 3 eine Querbewegung ausführen, sobald der Steuerungsring 8 die Verstellflächen 1g, 2h erreicht und solange er sich an diesen entlang bewegt. Mit der Fortsetzung der Verschiebebewegung fädelt sich der mitgeführte Spreizdorn 6 - durch das Zusammenwirken der Endkanten 6c mit den Übergangsbereichen 1e, 2 f - zwischen den Halteköpfen 1c, 2d ein und kommt zwischen diesen zum Stillstand, sobald sich die Steuerplatte 10 an dem Anschlag 12 abstützt. Der gegenseitige Abstand der Halteköpfe 1k und 2l ist dabei festgelegt durch die Öffnung 8a des Steuerungsrings 8, an dem sich die Greifarme 1, 2 über ihre Spreizstellungsfläche 1h bzw. 2i abstützen; der erwähnte Abstand ist allenfalls geringfügig größer als durch den Durchmesser des Spreizdorns 6 vorgegeben.

Wie Fig. 2a erkennen läßt, sind der Verfahrhub der Steuerplatte 10 und die Länge des Spreizdorns 6 derart aneinander angepaßt, daß dieser sich in der die Haltestellung der Greifarme 1 und 2 festlegenden, ausgefahrenen Spreizstellung bis in den Bereich der Vorsprünge 1k und 2l der Halteköpfe 1c, 2d erstreckt. Diese Ausgestaltung hat zur Folge, daß die Greifarme bei der Aufnahme des festgehaltenen Gegenstands durch den Haltevorgang selbst keine Biegebeanspruchung erfahren: Auf die Halteköpfe einwirkende Querkräfte werden beidseitig unmittelbar auf den Spreizdorn 6 übertragen und von diesem aufgenommen.

Zum Freisetzen des festgehaltenen Gegenstands wird die Steuerplatte 10 in entgegengesetzter Richtung, d. h. in Richtung auf den Rahmen 3, verfahren.

Dabei wird zunächst der Spreizdorn 6 aus dem Bereich der Halteköpfe 1c, 2d zurückgezogen, wobei die Greifarme 1, 2 der Einwirkung der Blattfeder unterworfen bleiben.

Mit der Annäherung des Steuerungsrings 8 an die Verstellflächen 1g, 2h werden die Greifarme fortschreitend aufeinanderzubewegt, bis sie einander berühren und schließlich der Spreizdorn 6 in der Fig. 1 angedeuteten Öffnungsstellung zum Stillstand gekommen ist.

Der Darstellung gemäß Fig. 3a ist entnehmbar, daß die Steuerplatte 10 außerhalb des Bereichs des an ihr befestigten Steuerrings 8 mit der Kolbenstange 12a eines Linearantriebs 12 in Verbindung steht, dessen Gehäuse 12b seinerseits am Rahmen 3 gehalten ist.

Unter Einwirkung des Linearantriebs 12 - der insbesondere als Hydraulik- oder Pneumatik-Zylinder ausgebildet sein kann - führen die Teile 8 und 10 den bereits beschriebenen Verfahrhub h zwischen der unteren Haltestellung und der oberen, strichpunktiert angedeuteten Öffnungsstellung aus. In der Haltestellung ragen die Halteköpfe (beispielsweise der dargestellte Haltekopf 1c) in den aufzunehmenden Gegenstand - eine Hülse 13 - hinein, deren Öffnung 13a in Anpassung an die Vorsprünge der Halteköpfe (beispielsweise den Vorspring 1k) hinterschnitten ist. Die Hülse 13 kann daher nur dann freigesetzt werden, falls die Greifarme nach Einfahren des Linearantriebs 12 die in Fig. 1 angedeutete Öffnungsstellung einnehmen.

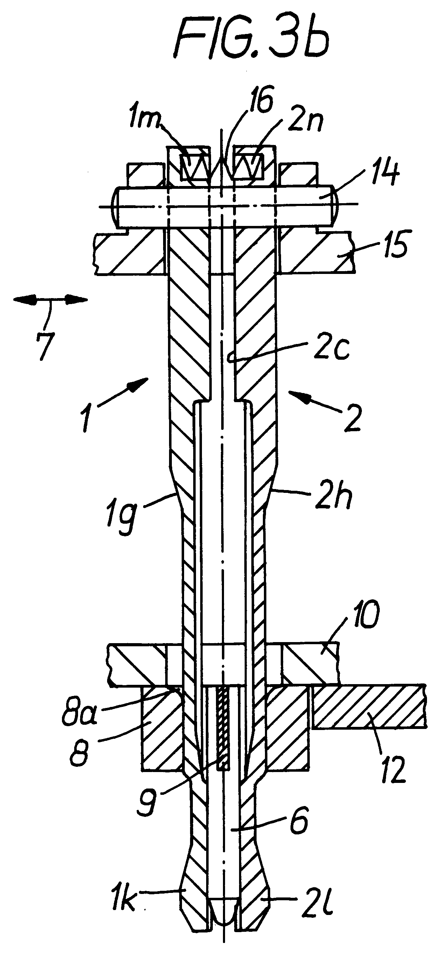

Die Ausführungsform gemäß Fig. 3 bis 6 unterscheidet sich in zweierlei Hinsicht von der Ausführungsform gemäß Fig. 1 und 2a, b.

Die Greifarme 1, 2 stützen sich in Richtung des Doppelpfeils 7 verschiebbar an einem Führungsbolzen 14 ab, der - in einer Konsole 15 gehalten - über diese mit dem Gehäuse 12b in Verbindung steht.

Oberhalb des Führungsbolzens 14 sind die Greifarme 1, 2 mit einer Innenbohrung 1m bzw. 2n ausgestattet, in denen sich eine vorgespannte Schraubenfeder 16 abstützt. Da diese die in Fig. 1, 2a dargestellte Blattfeder 5 ersetzt, ist die Innenfläche 2c ohne die in Fig. 2a dargestellte Aussparung 2b ausgebildet.

Fig. 3b läßt auch erkennen, daß die Öffnung 8a des Steuerungsrings 8 sich auf der der Steuerplatte 10 zugewandten Seite bogenförmig erweitert; durch diese Ausbildung werden Verkantungen mit der Außenfläche der Greifarme 1 und 2, insbesondere im Bereich der Verstellflächen 1g und 2h, vermieden.

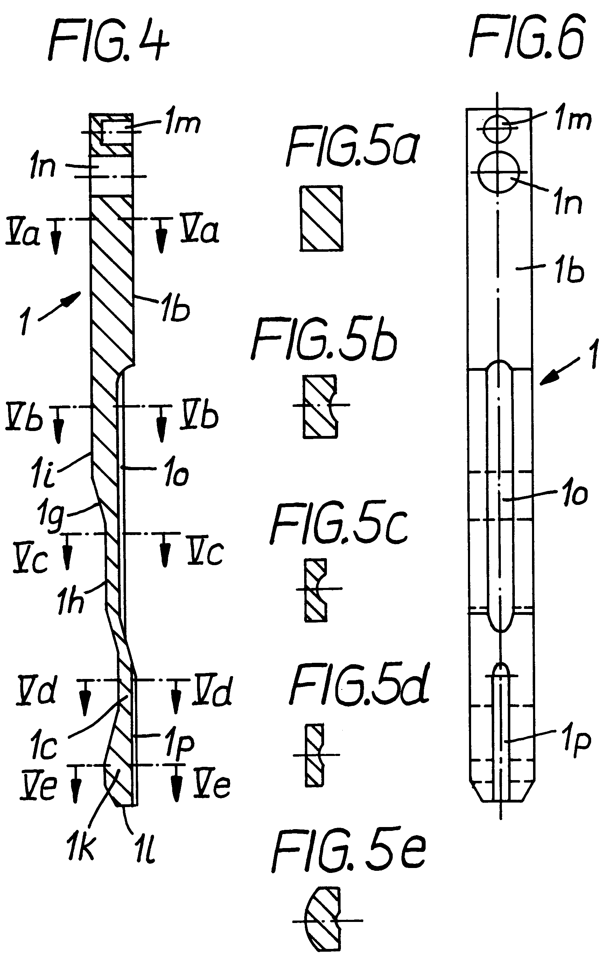

Die Fig. 4 bis 6 lassen - verdeutlicht am Beispiel des Greifarms 1 in der Ausführungsform gemäß Fig. 3a, b - alle Einzelheiten der Ausgestaltung der Greifarme erkennen. Mit 1n ist dabei die Durchgangsbohrung bezeichnet, in welche der Führungsbolzen 14 eingreift.

Die Fig. 5a bis e zeigen, wie sich die Wandstärke und der Querschnitt des Greifarms in Richtung auf dessen Haltekopf 1c verändern und daß die Wandstärke im Bereich des Haltekopfes 1c in der erwähnten Richtung unter Bildung des Vorsprungs 1k teilweise zunimmt.

Aus Fig. 6 ist ersichtlich, daß die Innenfläche im Bereich der Außenflächen 1i, 1g und 1h und bis in den Übergangsbereich zum Haltekopf 1c mit einer länglichen Vertiefung 1o und im Bereich des Haltekopfes 1c bis zu dessen Endfläche 1l mit einer weiteren Vertiefung 1p ausgestattet ist.
Diese Vertiefungen dienen der seitlichen Abstützung des Spreizdorns 6 während seines Verschiebehubes zwischen der Öffnungs- und der Spreizstellung.

Der erfindungsgemäße Lösungsgedanke ist nicht auf die Verwendung eines Spreizbolzens beschränkt, welcher einen Kreisquerschnitt aufweist; vielmehr können auch Ausführungsformen insbesondere mit einem viereck- oder ovalförmigen Querschnitt zur Anwendung kommen.
Auch die bewegliche Abstützung der Greifarme bezüglich des Rahmens kann andersartig ausgebildet sein; wesentlich ist in diesem Zusammenhang, daß die Greifarme relativ zueinander eine Querbewegung ausführen und die an ihnen angreifenden Kräfte auf den Rahmen übertragen können.

## Patentansprüche

1. Lochgreifer mit zwei Greifarmen, die parallel zu sich selbst und zueinander beweglich in einem Rahmen gehalten und unter Einwirkung eines Antriebs relativ zueinander in eine Öffnungs- oder eine Haltestellung verschiebbar sind, **gekennzeichnet**, durch folgende Merkmale:
   - zwischen den Greifarmen (1, 2) ist - an diesen anliegend - ein Spreizdorn (6) mittels des Antriebs (12) in Richtung auf deren Halteköpfe (1c, 2d) und von diesen weg verfahrbar gehalten;
   - in Richtung der Verschiebebewegung (Doppelpfeil 7) der Greifarme (1,2) gesehen ist der Spreizdorn (6) mit zueinander parallelen Außenkanten (6a) ausgestattet;
   - die einander zugewandten Innenflächen (1b, 2c) der Greifarme (1,2 ) weisen - im Längsschnitt durch die Spreizdorn-Längsachse (6d) in Richtung der Verschiebebewegung (Doppelpfeil 7) gesehen - einen geradlinigen, zur Längsachse (6d) parallelen Anfangsbereich (1d, 2e) auf, an dem der Spreizdorn (6) in der zurückgezogenen Öffnungsstellung anliegt, und sind im Anschluß an den Anfangsbereich (1d, 2e) mit einem in Richtung auf den jeweiligen Haltekopf (1c, 2d) geneigten Übergangsbereich (1e, 2f) ausgestattet, der jeweils in einen bezüglich des Anfangsbereichs (1d, 2e) vorspringenden, zu diesem parallelen Endbereich (1f, 2g) übergeht, an dem sich der Spreizdorn (6) in der Spreizstellung abstützt;
   - der Spreizdorn (6) ist ebenso mittels des Antriebs (12) bewegbar wie ein die Greifarme (1,2) umschließender Steuerungsring (8), dessen Öffnung (8a) den gegenseitigen Abstand der Greifarme begrenzt;
   - im Längsschnitt durch die Spreizdorn-Längsachse (6d) in Richtung der Verschiebebewegung (Doppelpfeil 7) gesehen weisen die Greifarme (1, 2) in einem Zwischenabschnitt, in dem der Spreizdorn (6) weder die Öffnungs- noch die Spreizstellung einnimmt, eine außenliegende Verstellfläche (1g, 2h) auf, die - bezüglich der Längsachse (6d) in Richtung auf den jeweiligen Haltekopf (1c, 2d) geneigt - in dieser Richtung in eine zur Längsachse (6d) parallele Spreizstellungsfläche (1h, 2i) und in dazu entgegengesetzter Richtung in eine gleichartig ausgerichtete Öffnungsstellungsfläche (1i, 2k) übergeht;
   - der Verfahrhub (h) des Antriebs (12) und die Länge des Spreizdorns (6) sind derart aneinander angepaßt, daß dieser sich in der die Haltestellung der Greifarme (1, 2) festlegenden, ausgefahrenen Spreizstellung zumindest bis in den Bereich des Halteabschnitts der Halteköpfe (1c, 2d) erstreckt, und
   - der Halteabschnitt ist zumindest als in Richtung der Verschiebebewegung (Doppelpfeil 7) weisender Vorsprung (1k, 2l) ausgebildet.

2. Lochgreifer nach Anspruch 1, dadurch gekennzeichnet, daß die Wandstärke der Halteköpfe (1c, 2d) zumindest auf einem Teil ihrer Längserstreckung in Richtung auf ihre Endfläche (1l, 2m) zunimmt.

3. Lochgreifer nach zumindest einem der vorhergehenden Ansprüche, dadurch gekennzeichnet, daß der Spreizdorn (6) an einem Tragelement (9) gehalten ist, welches senkrecht zur Ebene der Verschiebebewegung (Doppelpfeil 7) zwischen den Greifarmen (1, 2) angeordnet und an dem Steuerungsring (8) befestigt ist.

**4.** Lochgreifer nach zumindest einem der vorhergehenden Ansprüche, gekennzeichnet durch eine derartige Bemessung der Öffnung (8a) des Steuerungsrings (8), bei welcher der gegenseitige Abstand der Greifarme (1, 2) in der Haltestellung allenfalls geringfügig größer ist als durch den die Spreizstellung einnehmenden Spreizdorn (6) vorgegeben.

**5.** Lochgreifer nach zumindest einem der vorhergehenden Ansprüche, dadurch gekennzeichnet, daß der Steuerungsring (8) auf der von den Halteköpfen (1c, 2d) abgewandten Seite an einer Steuerplatte (10) gehalten ist, die mit dem Antrieb (12) in Verbindung steht.

**6.** Lochgreifer nach zumindest einem der vorhergehenden Ansprüche, dadurch gekennzeichnet, daß die Haltestellung durch einen am Rahmen (3) angebrachten Anschlag (12) festgelegt ist, an dem der Steuerungsring (8) oder die Steuerplatte (10) gegen Ende des Verfahrhubs (h) zur Anlage kommt.

**7.** Lochgreifer nach zumindest einem der vorhergehenden Ansprüche, dadurch gekennzeichnet, daß der Spreizdorn (6) von den parallelen Außenkanten (6a) ausgehend an seinem den Halteköpfen (1c, 2d) zugewandten Endabschnitt (6b) in Richtung auf diese geneigte Endkanten (6c) aufweist.

**8.** Lochgreifer nach zumindest einem der vorhergehenden Ansprüche, dadurch gekennzeichnet, daß auf die Greifarme (1, 2) ein Verstellelement (5 bzw. 16) einwirkt, welches bestebt ist, deren gegenseitigen Abstand zu vergrößern.

**9.** Lochgreifer nach zumindest einem der vorhergehenden Ansprüche, dadurch gekennzeichnet, daß auf der von den Halteköpfen (1c, 2d) abgewandten Rückseite der Greifarme (1, 2) eine an diesen angreifende Druckfeder (5 bzw. 16) angebracht ist.

FIG. 1

FIG. 2a

FIG. 2b

# FIG 3a

# FIG.3b

FIG.4

FIG.6

FIG.5a

FIG.5b

FIG.5c

FIG.5d

FIG.5e

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 698 756 (GROVES)<br>* das ganze Dokument * | 1,2 | B65G47/90<br>B66C1/54 |
| A | | 3-5 | |
| | --- | | |
| X | DE-C-1 046 791 (SIEMENS-SCHUCKERTWERKE)<br>* Spalte 4, Zeile 16 - Spalte 5, Zeile 23; Abbildungen 1,4,5 * | 1,3 | |
| A | | 8 | |
| | --- | | |
| A | AT-B-288 260 (COSTER TECNOLOGIE SPECIALI)<br>* Seite 1, Zeile 1 - Seite 2, Zeile 29; Abbildungen 1,4-6 * | 1,3,6,7 | |
| | --- | | |
| A | DE-A-2 445 177 (CARLO SCHABERGER SONDERMASCHINENBAU)<br>* Anspruch 1; Abbildungen 1-4 * | 1 | |
| | --- | | |
| A | DD-A-237 424 (VEB ROBOTRON)<br>* Seite 1, Zeile 49 - Zeile 51; Abbildungen 1-3 * | 1,8,9 | |
| | ----- | | **RECHERCHIERTE SACHGEBIETE (Int. Cl.5)**<br><br>B25J<br>B65B<br>B65G<br>B66C |

Der vorliegende Recherchenbericht wurde für alle Patentansprüche erstellt

| Recherchenort | Abschlußdatum der Recherche | Prüfer |
|---|---|---|
| BERLIN | 23 APRIL 1992 | SIMON J. |

EPO FORM 1503 03.82 (P0403)